# EUROPEAN PATENT SPECIFICATION

(11) **EP 1 999 908 B1**
(45) Date of publication and mention of the grant of the patent: **06.05.2015**
(21) Application number: 07734863.9
(22) Date of filing: 19.03.2007
(51) Int. Cl.: H04L 12/931

(54) **APPARATUS FOR DETECTING ERRORS IN A COMMUNICATION SYSTEM**
VORRICHTUNG FÜR FEHLERNACHWEIS IN EINEM KOMMUNIKATIONSSYSTEM
APPAREIL DE DETECTION D'ERREURS DANS UN SYSTEME DE COMMUNICATION

(30) Priority: 17.03.2006 US 378891
(43) Date of publication of application: 10.12.2008
(73) Proprietor: ALCATEL LUCENT, 92100 Boulogne-Billancourt (FR)
(72) Inventor: ANASTASIADIS, Chris, Ottawa, Ontario K2M 1G2 (CA); BELLENS, Arnaud, Ottawa, Ontario K1S 2N4 (CA)
(74) Representative: Wetzel, Emmanuelle
(86) International application number: PCT/IB2007/001663
(87) International publication number: WO 2007/107884

(56) References cited:
- EP-A- 0 977 457
- SUN MICROSYSTEMS ET AL: "RPC: Remote Procedure Call Protocol Specification Version 2" IETF STANDARD, INTERNET ENGINEERING TASK FORCE, IETF, CH, June 1988 (1988-06), XP015005998 ISSN: 0000-0003

## Description

### Field of the Invention

The present invention relates to apparatus for monitoring and detecting errors in communication systems, and in particular, but not limited to apparatus for monitoring and detecting errors in transactions between a control module, such as a management card and a communication module, such as a line card in a network switch or router.

### Background of the Invention

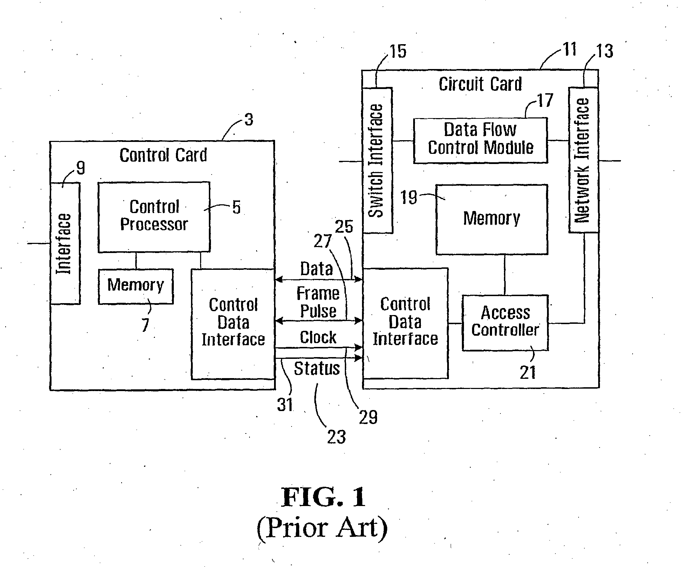

A communication network switch typically comprises a number of line cards each having a network interface comprising ports connected to a communication network for transmitting and receiving communication data to and from the network, a switch fabric for transmitting and receiving data to and from the line cards and a management or control card for managing and monitoring operation of each line card. A schematic diagram of a control card and circuit card of a network switch is shown in Figure 1. The control card 3 comprises a control processor 5, a memory 7, and a communication interface 9 for receiving and transmitting external communication signals. The line or circuit card 11 comprises a network interface 13 connected to a communication network (not shown), a switch interface 15 connected to a switch fabric (not shown), and a data flow control module 17 for controlling the flow of data between the network and switch interfaces. The circuit card further includes a memory 19 and a memory access controller 21. A control interface 23 is provided for transmitting control data from the control card to the circuit card. The interface comprises a bi-directional data bus 25 for transmitting data between the control and circuit cards, a bi-directional frame pulse line 27 for indicating start of data, a clock line 29 for transmitting clock pulses from the control card to the circuit card, and a status line 31 for transmitting status information from the control card to the circuit card.

Data derived from communication traffic flowing through the circuit card and data relating to operation of the circuit card is collected and stored in the circuit card memory 19 for transfer when required to the control card. Similarly, configuration data for configuring the circuit card and transferred from the local control card memory 7 is also stored in the memory 19. To access the memory 19, the control card transmits a read or write access request to the access controller 21 via the control interface 23. The access request includes the memory address, and also data if the request is a write access. The access controller 21 processes the request, and if the request is valid, access is permitted. Data is read from the memory and transferred to the control card via the control interface, for a read access, and data is written to the memory, in the case of a write access. The control card monitors receipt of the requested data from the circuit card, and if the requested data is not received within a predetermined time after sending the request, the control processor proceeds to execute the next operation.

### Summary of the Invention

According to the present invention, there is provided an apparatus comprising: a first module and a second module, the first module having a processor, an interface for transmitting control data from said first module to said second module to control operation thereof, said second module.comprising detection means for detecting status associated with communication signals received from said first module, said second module including reporting means for reporting the detected status to said first module.

In this arrangement, the second module comprises a detector for detecting status associated with communication signals received from the first module, and reporting means for reporting the detected status to the first module. This enables an error in a requested transaction from the first module to be detected by the second module and reported back to the first module, thereby enabling the first module to detect the failed transaction. This allows the first module to detect failed transactions earlier than otherwise waiting a predetermined period of time and determining that an error has occurred once the predetermined period of time has elapsed. Furthermore, this arrangement provides the opportunity to provide the first module with additional information to enable the cause of the error to be more precisely determined than hitherto possible.

In some embodiments, the reporting means includes a report generator for generating a status report for transmission to the first module, the status report including an indication of the signal from the first module with which the status is related. This arrangement enables the first module to relate the status to the particular signal transmitted from the first module. For example, for a read or write access request, the report may include an indication of the address contained in the access request. If the status indicates that the access is denied, a check can be made on the request transmission side that the address is valid, and if so, it may be deduced that the source of the error is elsewhere, for example at the control interface or at the second module. This is particularly useful for detecting software errors during software development, as well as during normal operation of the apparatus. Some embodiments provide a status reporting mechanism to a user and/or enable the first module to diagnose errors and take remedial action if applicable, as described in more detail below.

In some embodiments, the processor of the first module is adapted (e.g. programmed through a software entity) to read the detected status, which may be stored in a register or other device, and report the status to a user via any suitable means such as a user terminal connected to the first module. In some embodiments, the software entity running on the processor is adapted to determine from a reported error or failure whether it can take the required remedial action to recover, and if so, to take the required action.

In some embodiments, the software entity running on the processor of the first module which reads the reported status is used to diagnose failed transactions to the second module, and may also be used to diagnose failed control software running on the first module.

In some embodiments, the apparatus further comprises a third module which serves as a redundant module for the first module. Each of the first and third modules may communicate with the second module, and may also communicate with one or more other modules that may have a similar function to the second module.

The software entity reading the detected status may also be used to diagnose failed transactions to other modules and/or failed control software running on the third (e.g. redundant) module, if present.

This feature can be used for internal or external environments, including production software, development testing, diagnostics and manufacturing, for example. In some embodiments, the same software entity is run on the active and redundant modules, and the software entity running on each module is adapted to report status, e.g. errors independently for users to act upon. For internal usage, this feature can be used by developers and manufacturers of the modules to debug new and interesting features. For external environments where production field software is employed, it can be used for detecting failed modules and take remedial action if applicable.

In some embodiments, the reporting means includes means for selecting from a plurality of status indicators, each for indicating a different status associated with the communication signal from the first module, a status indicator for transmission to the first module. For example, the status indicators may each comprise a code representing a different status, and each code may be recognizable by the first module. In one embodiment, a status indicator may indicate that the request received by the second module is valid and another status indicator may indicate that the request received by the second module is invalid.

In some embodiments, both-error detection and error reporting are performed by the same module, e.g. the first module. This increases the robustness and reliability of the system as communications between the detection and reporting functions do not rely on an interface (which may fail). In some embodiments, the first module implements a time-out functionality with each request transmitted to the second module to enable the first module to detect nil response errors. In this embodiment, the first module can detect, both reported and non-reported (i.e. locally detected errors) for increased system reliability.

Embodiments of the apparatus are particularly applicable to High Reliability (Redundant Control and Data Path) Systems where modules can fail, and enables erred transactions to modules to be detected.

In some embodiments, the first module includes means for generating control data including a request for a read access to part of the second module, and the second module is adapted to include the status in a message with the requested information. In some embodiments, the second module is adapted to include a status in every message which is responsive to information requested by the first module. A particular field may be reserved in return messages from the second module to the first module for the status information, to facilitate detection of the information by the first module.

In some embodiments, the second module comprises a status indicator for indicating the status of the second module to the first module. In some embodiments, the first module comprises a status indicator detector for detecting the status indicator from the second module. This arrangement allows the first module to detect a fault in the control interface and/or the absence of a second module or a condition where the second module has been disconnected, pulled or has failed through a fatal hardware error or logic error. The status indicator may be transmitted periodically or at regular intervals. As the status of the second module is actively reported to the first module, a fault can be detected positively and more information about the fault can be provided to the first module. This also allows a fault in the second module to be detected sooner than in the prior art arrangement.

In some embodiments, the second module comprises a clock generator for generating a clock signal and the interface is adapted to transmit the clock signal to the first module. The first module may include a detector for detecting the clock signal from the first module. The detected status of the clock signal may be used to detect a condition of the interface and/or the second module. For example, the absence of a clock signal may indicate a fault at the interface and/or the second module or the absence of a second module or that the second module has been disconnected from the control interface.

In some embodiments, the first module comprises a detector for detecting status associated with communication signals received from the second module. For example, the detector may comprise a parity bit detector for detecting a parity error in data transmitted from the second module to the first module.

In some embodiments, the apparatus further comprises a third module having a processor, an interface for transmitting control data from the third module to the second module, the second module further comprising detection means for detecting status associated with communication signals received from the third module, the second module including reporting means for reporting the detected status to the third module.

In some embodiments, the third module is capable of performing similar operations to the first module and provides redundancy for the first module in case the first module fails.

In some embodiments, the third module includes status reporting means for reporting status information associated with at least one of the second and third modules to the first module. This arrangement allows the third module to detect errors associated with the second module, independently and separately from the first module and report these errors to the first module.

In some embodiments, the third module further comprises a detector for detecting status associated with communication signals received from the second module.

In some embodiments, the apparatus further comprises connector means for releasably connecting the second module to the interface.

Also according to the present invention, there is provided a control module for controlling one or more communication modules, the control module comprising: a control processor, an interface for transmitting control signals from said control module to a communication module and for receiving data from said communication module, and a detector for detecting at least one of a signal indicative of status of said communication module received from said interface, and status associated with control signals transmitted by said control module to said communication module, said status being received from said communication module via said interface.

According to the present invention, there is further provided a communication module, a data interface for receiving communication data, a first control interface for receiving control data from a control module for controlling said communication module, a second interface for transmitting data from said communication module to a control module, a memory for storing data, a memory access controller for controlling access to said memory in response to control data received from said control interface, and a detector for detecting status associated with control data received from said control interface, and transmission means for transmitting a message indicative of the detected status from said communication module via said interface.

### Brief Description of the Drawings

Examples of embodiments of the present invention will now be described with reference to the drawings, in which:
Figure 1 shows elements of a communication network switch according to the prior art;
Figure 2 shows a block diagram of an apparatus according to an embodiment of the present invention;
Figure 3 shows an example of a status detector in accordance with an embodiment of the present invention;
Figure 4A shows an example of a read request;
Figure 4B shows an example of a write request;
Figure 4C shows an example of a message generated in response to a read request;
Figure 4D shows an example of a message generated in response to a write request;
Figure 4E shows a message generated in response to a read or write request where an error is detected;
Figure 5 shows a block diagram of an apparatus according to another embodiment of the present invention; and
Figure 6 shows a block diagram of an interface of a communication module according to an embodiment of the present invention.

### Description of Embodiments

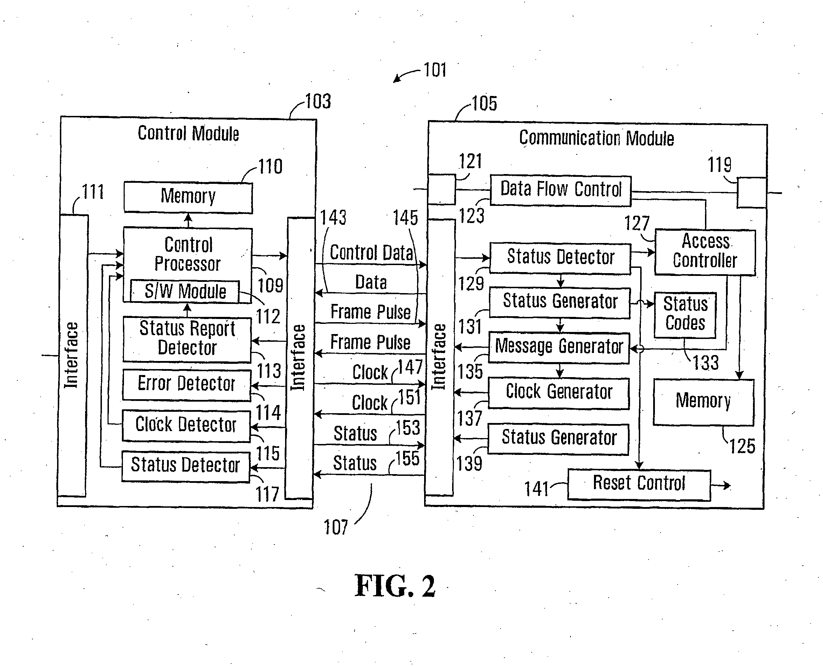

Referring to Figure 2, an apparatus 101 according to an embodiment of the present invention comprises a control module 103, a communication module 105 and a control interface 107 for transferring control data between the two modules. The control module 103 comprises a control processor 109, an interface 111 for receiving and transmitting external signals, a status report detector 113, an error detector 114, a clock detector 115 and a communication module status detector 117, each of which is connected to the control interface 107. The communication module 105 comprises a network interface 119, a switch interface 121 and a data flow control module 123. The communication module further comprises a memory 125, an access controller 127 for controlling access to the memory, a status detector 129 for detecting status associated with communication signals received from the control interface 107, a status generator 131, a status code module 133 for providing status codes to the status generator 131, a message generator 135, a clock generator 137, a status generator 139 and a reset controller 141.

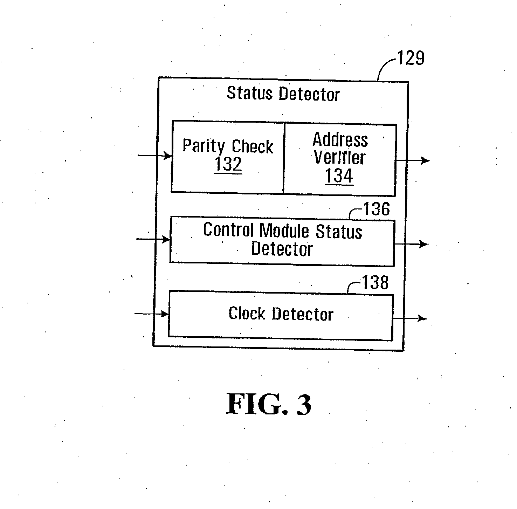

The control interface 107 comprises a bi-directional data bus 143 for transmitting control data between the control module and communication module, a bidirectional frame pulse line 145, a first clock line 147 for transmitting clock signals from the control module to the communication module, a second clock line 151 for transmitting clock signals from the communication module to the control module, a first status line 153 for transmitting status signals from the control module to the communication module and a second status line 155 for transmitting status signals generated by the status generator 139 from the communication module to the control module. As indicated above, the status detector 129 of the communication module 105 detects status associated with communication signals received from the control module. For example, the status detector may detect errors in communication signals received from the control module. The status detector may be implemented to detect errors in any desired manner and an exemplary embodiment is shown in more detail in Figure 3. Referring to Figure 3, the status detector 129 comprises a parity check module 132 an address verifier 134, a control module status detector 136 and a clock signal detector 138.

In operation, when a message is to be transmitted from the control module to the communication module, the control module determines the value of a parity bit based on the bits contained in the message and transmits the parity bit with the message via the interface. If the message is an access request, the message also contains the memory address to be accessed. In addition, either with the message or at a different time, the control module transmits its status to the communication module over the status line 153. The status detector also detects the clock signal from the control module transmitted over the clock line 149. On receiving the message, the parity checker 132 determines a parity bit from the bit values contained in the message and compares this with the parity bit transmitted with the messages. If the message contains an address, the address verifier 134 checks whether the address is valid, for example that the address actually exists.

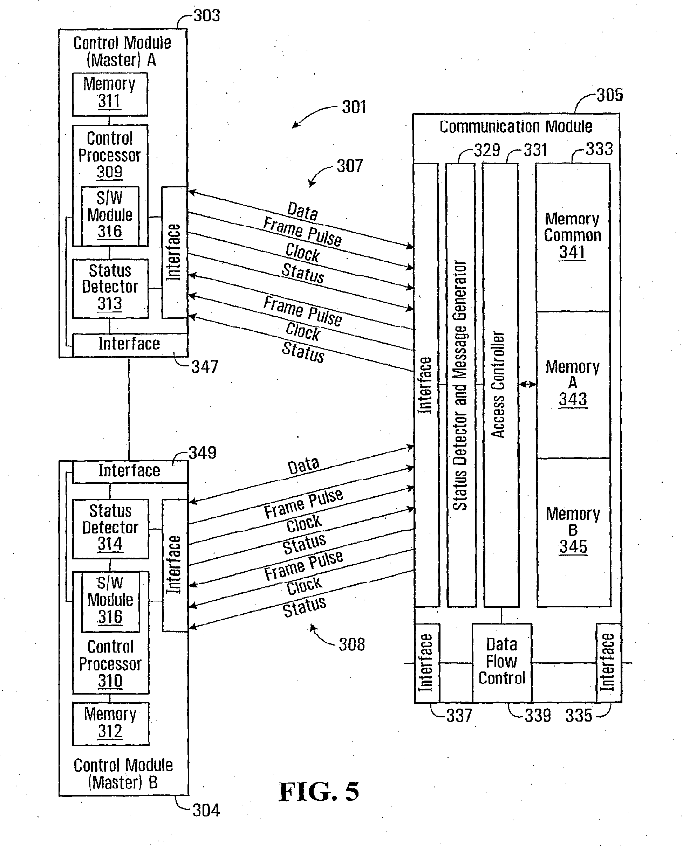

The control module status detector 136 detects the status of the control module. The status information transmitted by the control module may indicate that the control module is operating correctly and that the control module has the proper status to communicate with the communication module. For example, in a redundant system having two control modules (for example a second control module would be added to the embodiment of Figure 3 resulting in the configuration of Figure 5 for example), both of which can communicate with the communication module but only one module can function as the active module at any one time, the status may indicate that the control module is the current active module.

If the various elements of the status detector 129 verify that the message from the control module is valid, the status generator 131 generates a status report indicating that the message received from the control module is valid. In this embodiment, the status report comprises a code which is selected from a plurality of different codes, each representing a different status, stored in the status code table 133. The status generator passes the status report to the message generator 135 which generates a message for transmission to the control module. The message includes the status report together with an identifier which identifies the message received from the control module with which the status report is associated. In addition, the message generator may determine the value of a parity bit from the bit values contained in the message and include the parity bit in the message to enable the control module to perform a parity check on the message after transmission over the interface.

If the status detector determines that the message received from the control module contains an error, for example, because the message failed the parity check and/or contained an invalid address, the status generator selects an appropriate code representing the error and the message generator 135 generates a message for transmission to the control module which includes the error code and an identifier identifying the message transmitted by the control module in which the error was detected.

In some embodiments, a status report, e.g. error code, may be generated and transmitted by the communication module to the control module in response to every message transmitted from the control module, irrespective of whether an error has been detected. In other embodiments, a status report may be generated and transmitted by the communication module to the control module only in response to messages received from the control module in which an error is detected.

As indicated above, the status report, e.g. error code, may be adapted to indicate a characteristic of the error, such as the type of error or which element of the status detector detected the error. For example, the status report could be adapted to indicate whether the error is a parity error, an address error, an error in the status of the control module, an error in the clock signal (e.g. the absence of a clock signal) or a combination of any two or more of these. In one embodiment, different error codes could indicate (1) no errors detected, (2) a parity error detected on the communication module, (3) an access control error detected on the communication module, (4) a bus error detected on the communication module, (5) a time out error detected on the control module, (6) a parity error detected on the control module, and (7) a communication module presence error detected on the control module. Other codes may be used to indicate any other desired status.

Alternatively, or in addition to transmitting a status report in response to messages transmitted from the control module, in other embodiments, the communication module may transmit a status report in response to the detection of an error not necessarily associated with a message from the control module, such as an error in a clock signal, status signal or frame pulse signal transmitted from the control module. For example, the message generator 135 may be adapted to generate a status report in response to any one or more of the absence of a frame pulse, clock signal and/or status signal. For example, the status detector may detect the occurrence of an error where a frame pulse is detected but no data is detected on the data bus, or vice versa.

The status report detector 113 of the control module detects status reports transmitted from the communication module 105 to the control module via the control interface 107. The status report detector 113 enables the control module to monitor errors in transactions initiated by the control module which occur external to the control module, e.g. off-card. For example, the errors may occur at the control interface 107 or at the communication module 105, or both. In addition, the control module is adapted to detect errors locally, for example by using a 'time out', mechanism, and may also detect local errors, for example resulting from control software running on the control processor and/or other local errors. Status reports received by the control module and the detection of local errors may be used in any desired manner, which may include enabling the control module to determine the source or a possible source of the error and report this to an external device, and/or enable the control module to take appropriate action to remove the cause of the error. For example, a software entity, e.g. software module 112 in Figure 2, running on the control processor 109 or another device may be adapted to determine from the status report (and/or local error) the source of the error and initiate corrective action such as a reset and/or report its determination to an external device such as a management interface to inform an operator of the error and allow the operator to make a decision on what corrective action to take.

This feature is particularly useful for software development, allowing developers to discover and correct software errors. It is also particularly useful during normal operation of the apparatus, enabling the control module to automatically take the required remedial action such as resetting the communication module via the reset controller 141 in Figure 2, for example.

In some embodiments, the software entity is used to detect errors in a system having both an active and inactive control module. The 'internal' users of the software module may include development, software test and/or diagnostic applications designed to run on the control module processor. External production software may use this feature to ensure the system is highly robust by reporting errors from both control modules to the active control module or reporting failed operator upgrades (e.g. errors resulting from a wrong software load). In addition, the software module can be used to inject errors into the hardware mechanism to verify that the response received in the desired or expected result.

As indicated above, where the status report is associated with a message transmitted by the control module, the response returned by the communication module may include an identification of the message from the control module with which the report is associated. For example, if the message from the control module is a memory access request, the identifier associated with the status report may comprise the memory address. This additional information may be useful in identifying the source of the error and determining what corrective action should be taken.

Status reports may be handled in any desired manner. For example, status reports which indicate that no error has occurred may be stored, interpreted by the control module, or simply discarded. Status reports which indicate that an error has occurred may be processed by the control processor or another device to determine the source of the error and what action should be taken, and/or stored in a memory, for example memory 110. Alternatively, or in addition, status reports indicating the occurrence of an error may be transmitted from the control module to an external device.

The error detector 114 is adapted to detect intrinsic errors in messages received from the communication module. The error detector 114 may for example be adapted to perform a parity bit check or any other type of error check on data transmitted from the communication module.

The clock detector 115 is adapted to detect the clock signal transmitted on line 151 from the communication module.

The status detector 117 is adapted to detect the status signal transmitted from the communication module on line 155 of the control interface 107. The error detector 114, the clock detector 115 and the status detector 117 may also be used to detect errors, malfunctions in the control interface and/or the communication module, including whether the communication module is present or disconnected from the interface.

In this embodiment, the error detection mechanism is implemented locally on the control module and detects some errors and handles status reports from the communication module. This makes error detection robust and reliable, as the software entity that processes the errors and the error detectors reside on the same module, and therefore the information does not need to cross an interface, which may introduce errors such as bit and parity errors.

Each feature of the communication module which transmits a signal to the control module which allows the control module to detect external errors allows the control module to detect such errors more reliably and possibly sooner than hitherto possible, and in particular in comparison to prior art methods where the control processor is required to wait a period of time for a return signal and can only resume operation once the period has expired or "timed-out". The present system may also provide more information about the error so that appropriate action can be better and more intelligently determined.

Thus, the transaction acknowledgement method increases the reliability of the system in detecting errors. Providing a local error detection mechanism (e.g. using local logic and time-outs) in combination with the acknowledgement method increases the reliability of the system further. Embodiments also accommodate redundancy and allow software to run on redundant processor(s) and report errors independently. The error detection mechanism also allows failed communication modules to be detected and possibly restarted. Embodiments also provide a simple solution in comparison to other mechanisms that are compatible with redundant systems that may use a more complex PCI based solution.

Non-limiting examples of the information that can be determined from the error detection system of the embodiment of Figure 2 is described below.
1) A parity bit error in a message transmitted from the control module may indicate a problem with the control interface.
2) An error in the address of a memory access request from the control module may indicate an error in the control module, for example an error in software code, or possibly a hardware error.
3) A bad status signal from the control module may indicate a problem with the control module or with the control interface.
4) The absence of a clock signal from the control module may indicate a problem with the clock generator and/or the control interface.
5) If a clock signal is received by the communication module but the status signal received from the control module indicates a problem, then it may be deduced that there is either a problem with the control module or with the interface.
6) The absence of a signal from the control module on any one or more lines of the control interface may indicate a problem with the interface or that part of the interface is disconnected from the communication module.
7) An indication in the status report transmitted from the communication module to the control module of a parity error may be indicative of a fault in the control interface. An indication of an invalid address in the access request may indicate a fault in the control software of the control module or a fault in the control interface.
8) The absence of a clock signal from the communication module may indicate a problem with the clock generator of the communication module or a problem with the interface.
9) A bad status signal from the communication module may indicate a problem with the communication module. If the bad status signal is accompanied by a clock signal, it may be determined that the cause of the problem lies with the communication module rather than the interface.
10) The presence of a parity error in a message received from the communication module may be indicative of a problem with the communication module or the interface or both.
11) The absence of any signal from the communication module may indicate that there is a problem with the interface and/or the communication module, or that the communication module is absent.

As the status signal and the clock signal from the communication module are generated independently of the control module, the control module can detect a problem with the control interface and/or communication module without transmitting a signal to the communication module, such as an access request, which allows the control module to detect external errors or problems earlier than in prior art systems.

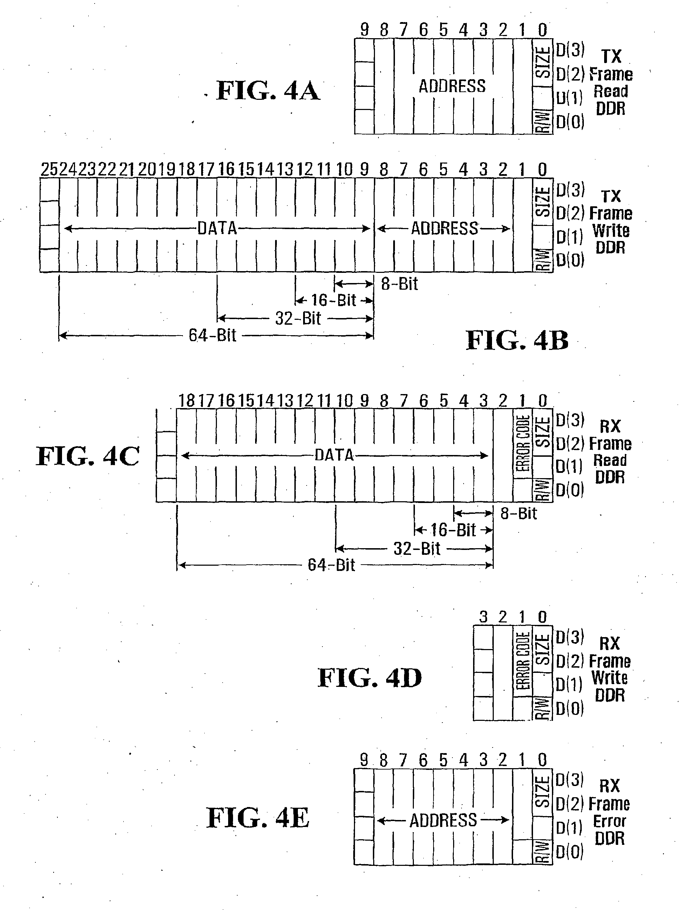

Figures 4A to 4E show non-limiting examples of frame formats for transmitting communication signals over the control interface. Each frame is formatted for transmission over a data bus comprising four parallel bit lines. In other embodiments, each frame may be formatted for transmission over a data bus having any other number of bit lines, any may be formatted in any other way.

Figure 4A shows an example of a read access request frame for transmission from the control module to the communication module. The read frame includes a header portion of .8 bits in the first and second fields (0, 1) which contains information such as the size of the frame and an indication that the frame is a read request. In this embodiment, fields two to eight comprising 28 bits contain the memory address and each of the last four bits, in field 9, contain a parity bit to enable the communication module to perform a parity check.

Figure 4B shows an example of a frame for a write access request for transmission from the control module to the communication module. The frame comprises a header of 8 bits in the first and second fields containing an indication of the frame size and that the frame is a write request. The next seven fields (i.e. 28 bits) contain the address to which data is to be written and subsequent fields (9 to 24 in this embodiment) are allocated for data. The four bits of the last field (field 25) each contain a parity bit to enable the communication module to carry out a parity check.

Figure 4C shows an example of a frame containing data read from memory for transmission from the communication module to the control module. In this embodiment, the frame comprises a header of 12 bits in the first three frames which includes information on the size of the frame, that the frame is a "read frame", i.e. contains data resulting from a memory read, and also contains an error report, which in this example comprises an error code of 3 bits contained in the second field. In other embodiments, the status report or error code may be composed of any other number of bits. The third to the eighteenth field are reserved for data, and the last field of 4 bits are each reserved for a parity bit to enable the control module to perform a parity check on the received read frame.

Figure 4D shows an example of.a frame for transmission from the communication module to the control module in response to a write access request from the control module. The frame comprises a header of 3 fields (i.e. 12 bits) which contain an indication of the frame size, that the frame is an acknowledgement responsive to a write access request, and a status report, which in this embodiment, comprises an error code of 3 bits contained in the second field. The last field of 4 bits is reserved for parity bits to enable the control module to perform a parity check.

Figure 4E shows an example of a frame for transmission from the communication module to the control module when an error has been detected. The frame includes a header of two fields (0, 1) containing an indication of the frame size and whether the frame is responsive to a read access or write access request. The header also includes a status report, which in this embodiment, comprises an error code of 3 bits in the second field. The error code may be used to indicate the type of error or errors which have been detected, examples of which are described above.

In this embodiment, the third to the ninth fields (fields 2 to 8) contain the address which was included in the read or write access request. Again, the last frame of 4 bits is reserved for parity bits to enable the control module to perform a parity error check.

Figure 5 shows an apparatus according to another embodiment of the present invention. The apparatus 301 comprises first and second control modules 303, 304 and a communication module 305. A control interface 307, 308 is provided for transmitting control data between each control module and the communication module. Each control module 303, 304 may be similar to the control module described above in connection with Figure 2 and the description of the control module of Figure 2 can apply equally to each control module 303, 304. Likewise, the communication module 305 may be similar to the communication module described above in connection with Figure 2, and the description on the communication module of Figure 2 can apply equally to the communication module of Figure 5. Each control interface 307, 308 is also similar to the control interface of the embodiment of Figure 2, and the description thereof applies equally to the control interface of Figure 5.

In this embodiment, each control module 303, 305 comprises a control processor 309, 310, a memory 311, 312 and a status detector 313, 314. Each status detector may function in accordance with any one or more of the status report detector 113, the error detector 114, the clock detector 115 and the status detector 117 of the control module of Figure 2. For example, the status detector may be adapted to detect status reports, such as error codes contained in messages transmitted from the communication module. The status detector may be adapted to perform a check for intrinsic errors in messages from the communication module such as a parity error check. The status detector may be adapted to detect the clock signal from the communication module and/or status signals indicating the status of the communication module.

The communication module 305 comprises a status detector and message generator module 329, an access controller 331 and a memory 333. The communication module also includes a network interface 335 for connection to a communication network (not shown), a switch interface 337 for connection to a switch fabric (not shown) and a data flow control module 339 for controlling the flow of data between the interfaces 335, 337.

Each control interface 307, 308 may be similar to that described above in connection with Figure 2.

The status detector and message generator module 329 of the communication module is adapted to detect the status associated with messages received from each of the control modules 303, 304, for example to detect errors in the messages such as parity errors and address errors. As for the embodiment of Figure 2, the module 329 generate a status from each message received, for transmission back to the appropriate control module indicating whether or not an error has occurred. Alternatively, or in addition to generating status reports in response to messages received from each control module, the status detector and message generator module 329 may detect status associated with any one or more of frame pulse, clock and status received from each control module and transmit a report indicating the status of these signals, for example, the detection of an error.

In this embodiment, the memory comprises three sections, a common memory section 341, a memory section 343 which is for the exclusive use of the first control module 303 and a third memory section 345 which is for the exclusive use of the second control module 304. Access to each memory section is controlled by the access controller 331.

The apparatus of Figure 5 may be adapted to operate in a redundant configuration, with only one of the control modules being active at any one time. For example, the first control module 303 may serve as the normally active control module and the second control module 304 may be normally inactive, and become active if the first control module malfunctions or fails. However, even when inactive, the second module may perform similar functions as the active control module 303 and interact with the communication module in a similar manner. For example, the inactive control module may perform similar functions to the active module in monitoring the status and functions of the communication module, and requesting and receiving data therefrom, which may include status information from various components of the communication module and data derived from communication traffic flows such as statistical data, and data associated with the data flow control module, such as queue or buffer status and/or scheduler status.

Thus, in one embodiment, both the active and inactive control modules may run the same control software, for example software modules 316, 318, concurrently. However, certain functions such as configuring and resetting the communication module, can only be performed by the active control module. In this embodiment, the access controller 331 is implemented to restrict memory access as follows. The access controller 331 is adapted to allow the first control module to read and write from and to both the common memory 341 and its dedicated memory section 343. The access controller is further adapted to permit the second control module to access its exclusive memory section 345, to allow the second control module read access to the common memory but prohibit the second module from write access to the common memory.

In operation, while the second control module is in the inactive state, it interacts with the communication module in a similar manner to the active control module, and also operates to detect errors in a similar manner to the active module. Therefore, the inactive control module 349, the second control interface 308, and the status detector and message generator 329 which receives and transmits communication signals on the second interface provide a separate and independent means of monitoring operation of the communication module, and at the same time enables the second control interface to be monitored.

A communication interface 347 is provided between the first and second control modules 303, 304 for passing communication signals therebetween. The communication interface may be adapted to enable status information received by the second control module to be transferred to the first control module (and vice versa). This allows information about the communication module received by the second control module and the status information relating to the second control interface to be transferred and possibly processed by the first control module and appropriate action to be taken.

For example, the occurrence of an error detected by the second control module can be used to determine the cause or source of the error either alone or in combination with an error or condition detected by the first control module. As the second control module potentially interacts with different components of the communication module and at different times than the first control module, it is possible that the second control module will detect an error condition earlier than the first control module, thereby increasing the efficiency of error detection. It is also possible that errors in the communication module which cannot be detected by the first control module can be detected by the second control module, and therefore this arrangement may allow a broader range of aspects of the communication module to be monitored.

As mentioned above, both control modules may operate in the same manner and run essentially the same software. Therefore, it is possible that the second, inactive module will request from time to time a write access to the common memory which is restricted to the active module. In this case, the status detector may detect an invalid address in the write access request from the second module and generate and transmit an error message to the second module via.the second control interface. The generation and transmission of an error message may be prevented by masking common memory write access requests from the second control module while the module is inactive. On the other hand, the transmission of common memory write access requests may be permitted and the second module conditioned to ignore the resulting error message.

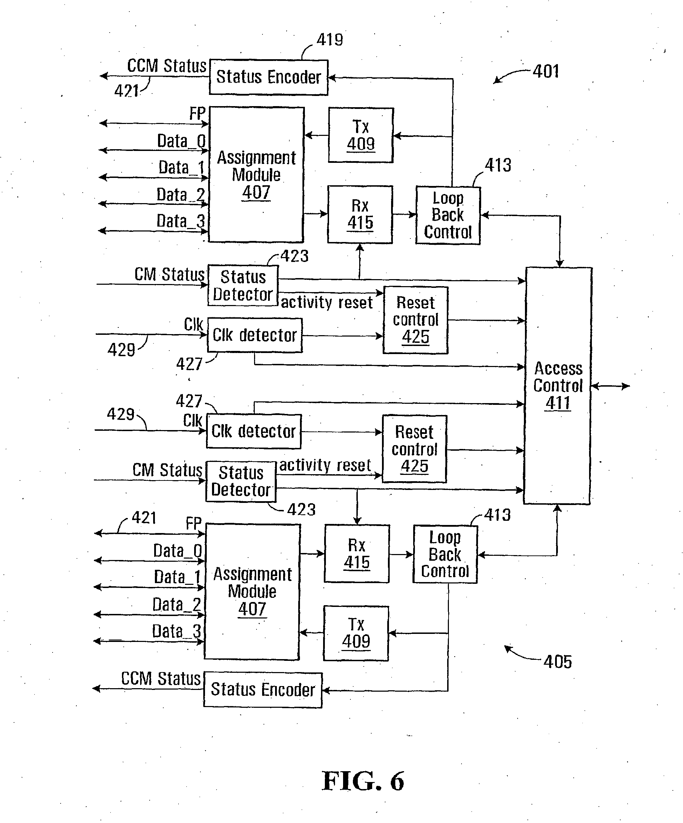

Figure 6 shows an embodiment of first and second control interfaces of a communication module in more detail. Each interface 403, 405 is identical and therefore only the first interface 403 is described below. The interface comprises a bus assignment module 407 connected to five bi-directional single bit lines, four of which are used to carry data and one used to carry frame pulses (FP). The bus assignment module translates data received from the data bus into a format that is readable by the receiver module, and translates data from the transmitter module into a format that can be transmitted on the data bus. In one embodiment, the bus assignment module may be adapted to perform a parallel to serial conversion for received data, and a serial to parallel conversion of outgoing data. A transmitter module 409 is operatively coupled to receive data from an access controller 411 via a loop back control module 413 and for passing the data to the bus assignment module 407 which transfers the data onto the data bus. The loop back control module monitors different acknowledgement messages sent to the transmitted module. A receiver module 415 is operatively coupled to receive data from the data bus via the bus assignment module 407 and transmit the received data to the access controller 411 via the loop back controller 413. The status encoder 417 is operatively coupled to receive communication module status data from the access controller 411 via the loop back controller 413 and transmit the communication module status onto the status line 421.

The interface further includes a status decoder 423 for receiving status data from a control module. The status decoder has two outputs, one of which is connected to the receiver module 415 and the access controller 411, and the other is connected to a reset controller 425. The interface also includes a clock detector 427 for receiving a clock signal from the clock line 429 and for passing the clock signal to the reset controller 425 and the access controller 411. In this embodiment, the control module status line is used both to indicate the status of the control module, for example, that the control module is active or inactive, and also to carry a reset signal to cause the reset controller 425 to reset the communication module. The status signal is decoded by the status decoder. If the signal is indicative of the status of the control module it is passed to the receiver module 415 and the access controller 411, and if the signal is a reset signal, it is passed to the reset controller 425.

Embodiments of the apparatus are particularly applicable but not limited to communication devices, and may be incorporated in any network switch or router, for example. The error monitoring and detection system render embodiments of the apparatus particularly useful before and during software development, particularly as a debug tool. Embodiments of the apparatus are also particularly useful in monitoring and detecting errors during normal operation of the apparatus, for example when incorporated into a communication device and enables the device to automatically take remedial action if an error is detected, without the necessity for human intervention.

In any embodiments described or claimed herein, the apparatus may comprise two or more communication modules connected to the control module, and optionally to a second control module in a redundant system, and the control module(s) may interact with each communication module according to any one or more of the features described herein. In any embodiment described herein, the control module (and/or inactive control module) may have any number of control interfaces for communication with any number of communication modules.

Other aspects and embodiments of the present invention comprise any one or more features disclosed herein in combination with any one or more other features disclosed herein or an equivalent or variant thereof. In any embodiment disclosed herein, any one or more features may be omitted altogether or substituted by another feature or an equivalent or variant thereof.

Numerous modifications and changes to the embodiments described above will be apparent to those skilled in the art.

## Claims

1. A communication device (101; 301) comprising:
a control module (103; 303) in the communication device (101; 301) and a line card (105; 305) in the communication device (101; 301) for connection to a communication network, the control module (103; 303) having a processor (109; 309),
a control interface (107; 307) in the communication device (101; 301) for transmitting control data from said control module (103; 303) to said line card (105; 305) to control operation thereof, said control interface (107; 307) comprises a bi-directional data bus (143) for transmitting said control data from said control module (103; 305) to said line card (105; 305),
said line card (105; 305) comprising:
a status detector (129; 329) for detecting an error respectively associated with said control data received from said control module (103; 303), and reporting means (131-139; 329) for generating a message for transmission to said control module (103; 303), said message comprising an indication of said error associated with said received control data and detected by the status detector (129; 329), wherein said control module is configured to determine a value of a parity bit based on bits contained in said control data and to transmit the parity bit with said control data via the control interface, wherein said status detector comprises a parity check module (132), an address verifier (134), a control module status detector (136) and a clock signal detector (138), wherein said parity check module (132) is configured to determine a parity bit from bit values contained in said control data and to compare this with said parity bit transmitted with said control data, wherein said address verifier (134) is configured to, if said control data contains a memory address, check whether the address is valid, wherein said control module status detector (136) is configured to detect a status of the control module, and wherein said clock signal detector (138) is configured to detect a clock signal from said control module transmitted over a clock line (149).

2. A communication device (101; 301) as claimed in claim 1, wherein said control data comprise respective messages, said reporting means (131-139; 329) generating a status report for transmission to said control module (103; 303), said status report including an indication of a message received from the control module (103; 303) with which the detected error is associated.

3. A communication device (101; 301) as claimed in claim 1 or 2, wherein the reporting means (131-139; 329) includes means for selecting from a plurality of status indicators, each for indicating an error associated with said control data received from said control module (103; 303), a status indicator for transmission to said control module (103; 303) as said indication of the detected error.

4. A communication device (101; 301) as claimed in any one of claims 1 to 3, wherein said control module (103; 303) includes means for generating control data, including a request for one of a read access and a write access to a part of said line card (105; 305), and said reporting means (131-139; 329) is adapted to include said indication of the detected error in a message with information in reply to said request.

5. A communication device (301) as claimed in any one of claims 1 to 4, further comprising another control module (304) having a processor (310), an interface (308) for transmitting control data from said other control module (304) to said line card (305), detection means (329) for detecting error respectively associated with control data received from said other control module (304), said reporting means (329) generating a message comprising an indication of an error associated with said received control data to said other control module (304).

6. A communication device (301) as claimed in claim 5, wherein said other control module (304) includes status reporting means (314) for reporting status information associated with at least one of the line card (305) and the other control module (304) to said control module (303).

7. A communication device (101; 301) as claimed in claim 5 or 6, wherein said other control module (304) further comprises a detector (314) for detecting status associated with control data received from said line card (305).

8. A communication device (101; 301) as claimed in any one of claims 1 to 7, further comprising connector means for releasably connecting said line card (105; 305) to said interface (107; 307, 308).

## Patentansprüche

1. Kommunikationsvorrichtung (101; 301), umfassend:
Ein Steuermodul (103; 303) in der Kommunikationsvorrichtung (101; 301) und eine Leitungskarte (105; 305) in der Kommunikationsvorrichtung (101; 301) für die Verbindung mit einem Kommunikationsnetzwerk, wobei das Steuermodul (103; 303) einen Prozessor (109; 309) aufweist,
eine Steuerschnittstelle (107; 307) in der Kommunikationsvorrichtung (101; 301) für die Übertragung von Steuerdaten von dem besagten Steuermodul (103; 303) an die besagte Leitungskarte (105; 305), um deren Betrieb zu steuern, wobei die besagte Steuerschnittstelle (107; 307) einen bidirektionalen Datenbus (143) für die Übertragung der besagten Steuerdaten von dem besagten Steuermodul (103; 303) an die besagte Leitungskarte (105; 305) umfasst,
wobei die besagte Leitungskarte (105; 305) umfasst:
einen Zustandsdetektor (129; 329) für die Erfassung eines jeweils mit den von dem besagten Steuermodul (103; 303) empfangenen Steuerdaten assoziierten Fehlers, und ein Meldemittel (131-139; 329) für die Erzeugung einer Nachricht zur Übertragung an das besagte Steuermodul (103; 303), wobei die besagte Nachricht eine Angabe über den besagten mit den besagten empfangenen Steuerdaten assoziierten und von dem Zustandsdetektor (129; 329) erfassten Fehler umfasst, wobei das besagte Steuermodul für die Ermittlung eines Wertes eines Paritätsbits auf der Basis von in den besagten Steuerdaten enthaltenen Bits und für die Übertragung des Paritätsbits mit den besagten Steuerdaten über die Steuerschnittstelle konfiguriert ist, wobei der besagte Zustandsdetektor ein Paritätsprüfmodul (132), eine Adressprüfeinrichtung (134), einen Steuermodulzustandsdetektor (136) und einen Taktsignaldetektor (138) umfasst, wobei das besagte Paritätsprüfmodul (132) für die Ermittlung eines Paritätsbits aus in den besagten Steuerdaten enthaltenen Bitwerten und für dessen Vergleich mit dem besagten mit den besagten Steuerdaten übertragenen Paritätsbit konfiguriert ist, wobei die besagte Adressprüfeinrichtung (134) dafür konfiguriert ist, zu prüfen, ob die Adresse gültig ist, wenn die besagten Steuerdaten eine Speicheradresse enthalten, wobei der besagte Steuermodulzustandsdetektor (136) für das Erfassen eines Zustands des besagten Steuermoduls konfiguriert ist, und wobei der besagte Taktsignaldetektor (138) für die Erfassung eines von dem besagten Steuermodul über eine Taktleitung (149) übertragenen Taktsignals konfiguriert ist.

2. Kommunikationsvorrichtung (101; 301) nach Anspruch 1, wobei die besagten Steuerdaten jeweilige Nachrichten umfassen, wobei das besagte Meldemittel (131-139; 329) eine Zustandsmeldung zur Übertragung an das besagte Steuermodul (103; 303) erzeugt, wobei die besagte Zustandsmeldung eine Angabe über eine von dem Steuermodul (103; 303) empfangene Nachricht, mit welcher der erfasste Fehler assoziiert ist, enthält.

3. Kommunikationsvorrichtung (101; 301) nach Anspruch 1 oder 2, wobei das besagte Meldemittel (131-139; 329) Mittel zum Auswählen, aus einer Vielzahl von Zustandsindikatoren, welche jeweils für die Angabe eines mit den besagten von dem besagten Steuermodul (103; 303) empfangenen Steuerdaten assoziierten Fehlers bestimmt sind, eines Zustandsindikators für die Übertragung als die besagte Angabe über den erkannten Fehler an das besagte Steuermodul (103; 303) umfasst.

4. Kommunikationsvorrichtung (101; 301) nach einem beliebigen der Ansprüche 1 bis 3, wobei das besagte Steuermodul (103; 303) ein Mittel zum Erzeugen von Steuerdaten, einschließlich einer Anforderung für entweder einen Lesezugriff oder einen Schreibzugriff zu einem Teil der besagten Leitungskarte (105; 305), umfasst, und wobei das besagte Meldemittel (131-139; 329) dazu ausgelegt ist, die besagte Angabe über den erkannten Fehler in eine Nachricht mit Informationen in Antwort auf die besagte Anforderung einzufügen.

5. Kommunikationsvorrichtung (301) nach einem beliebigen der Ansprüche 1 bis 4, weiterhin umfassend ein weiteres Steuermodul (304) mit einem Prozessor (310), einer Schnittstelle (308) zum Übertragen von Steuerdaten von dem besagten weiteren Steuermodul (304) an die besagten Leitungskarte (305), ein Erfassungsmittel (329) zum Erfassen eines jeweils mit den von dem besagten weiteren Steuermodul (304) empfangenen Steuerdaten assoziierten Fehlers, wobei das besagte Meldemittel (329) eine Nachricht mit einer Angabe über einen mit den besagten empfangenen Steuerdaten assoziierten Fehler an das besagte weitere Steuermodul (304) erzeugt.

6. Kommunikationsvorrichtung (301) nach Anspruch 5, wobei das besagte weitere Steuermodul (304) Zustandsmeldemittel (314) zum Melden von mit mindestens entweder der Leitungskarte (305) oder dem weiteren Steuermodul (304) assoziierten Zustandsinformationen an das besagte Steuermodul (303) umfasst.

7. Kommunikationsvorrichtung (101; 301) nach Anspruch 5 oder 6, wobei das besagte weitere Steuermodul (304) weiterhin einen Detektor (314) zum Erfassen eines mit den besagten von der besagten Leitungskarte (305) empfangenen Steuerdaten assoziierten Zustands umfasst.

8. Kommunikationsvorrichtung (101; 301) nach einem beliebigen der Ansprüche 1 bis 7, weiterhin umfassend ein Verbindungsmittel zum lösbaren Verbinden der besagten Leitungskarte (105; 305) mit der besagten Schnittstelle (107; 307, 308).

## Revendications

1. Dispositif de communication (101 ; 301) comprenant :
un module de commande (103 ; 303) dans le dispositif de communication (101 ; 301) et une carte de ligne (105 ; 305) dans le dispositif de communication (101 ; 301) à connecter à un réseau de communication, le module de commande (103 ; 303) présentant un processeur (109 ; 309),
une interface de commande (107 ; 307) dans le dispositif de communication (101 ; 301) pour transmettre des données de commande entre ledit module de commande (103 ; 303) et ladite carte de ligne (105 ; 305) afin de commander son opération, ladite interface de commande (107 ; 307) comprenant un bus de données bidirectionnel (143) pour transmettre lesdites données de commande entre ledit module de commande (103 ; 303) et ladite carte de ligne (105 ; 305),
ladite carte de ligne (105 ; 305) comprenant :
un détecteur d'état (129 ; 329) pour détecter une erreur respectivement associée auxdites données de commande provenant dudit module de commande (103 ; 303), et des moyens de rapport (131 à 139 ; 329) pour générer un message à transmettre audit module de commande (103 ; 303), ledit message comprenant une indication de ladite erreur associée auxdites données de commande reçues et détectée par le détecteur d'état (129 ; 329), dans lequel ledit module de commande est configuré pour déterminer une valeur d'un bit de parité sur la base de bits contenus dans lesdites données de commande et pour transmettre le bit de parité avec lesdites données de commande par l'intermédiaire de l'interface de commande, dans lequel ledit détecteur d'état comprend un module de contrôle de parité (132), un vérificateur d'adresse (134), un détecteur d'état du module de commande (136) et un détecteur de signal d'horloge (138), dans lequel ledit module de contrôle de parité (132) est configuré pour déterminer un bit de parité à partir de valeurs de bits contenues dans lesdites données de commande et pour le comparer audit bit de parité transmis avec lesdites données de commande, dans lequel ledit vérificateur d'adresse (134) est configuré, si lesdites données de commande contiennent une adresse de mémoire, pour vérifier si l'adresse est valide, dans lequel ledit détecteur d'état du module de commande (136) est configuré pour détecter un état du module de commande, et dans lequel ledit détecteur de signal d'horloge (138) est configuré pour détecter un signal d'horloge à partir dudit module de commande transmis sur une ligne d'horloge (149).

2. Dispositif de communication (101 ; 301) selon la revendication 1, dans lequel lesdites données de commande comprennent des messages respectifs, lesdits moyens de rapport (131 à 139 ; 329) générant un rapport d'état à transmettre audit module de commande (103; 303), ledit rapport d'état comprenant une indication d'un message provenant du module de commande (103; 303) à laquelle l'erreur détectée est associée.

3. Dispositif de communication (101 ; 301) selon la revendication 1 ou 2, dans lequel les moyens de rapport (131 à 139; 329) comprennent des moyens pour sélectionner à partir d'une pluralité d'indicateurs d'état, chacun pour indiquer une erreur associée auxdites données de commande provenant dudit module de commande (103; 303), un indicateur d'état à transmettre audit module de commande (103 ; 303) comme ladite indication de l'erreur détectée.

4. Dispositif de communication (101 ; 301) selon l'une quelconque des revendications 1 à 3, dans lequel ledit module de commande (103 ; 303) comprend des moyens pour générer des données de commande, comprenant une demande pour un accès en lecture ou un accès en écriture à une partie de ladite carte de ligne (105 ; 305), et lesdits moyens de rapport (131 à 139 ; 329) sont adaptés pour comprendre ladite indication de l'erreur détectée dans un message avec des informations en réponse à ladite demande.

5. Dispositif de communication (301) selon l'une quelconque des revendications 1 à 4, comprenant en outre un autre module de commande (304) présentant un processeur (310), une interface (308) pour transmettre des données de commande à partir dudit autre module de commande (304) à ladite carte de ligne (305), des moyens de détection (329) pour détecter une erreur respectivement associée aux données de commande provenant dudit autre module de commande (304), lesdits moyens de rapport (329) générant un message comprenant une indication d'une erreur associée auxdites données de commande reçues vers ledit autre module de commande (304).

6. Dispositif de communication (301) selon la revendication 5, dans lequel ledit autre module de commande (304) comprend des moyens de rapport d'état (314) pour rapporter des informations d'état associées à une carte de ligne (305) et/ou à l'autre module de commande (304) audit module de commande (303).

7. Dispositif de communication (101 ; 301) selon la revendication 5 ou 6, dans lequel ledit autre module de commande (304) comprend en outre un détecteur (314) pour détecter un état associé aux données de commande provenant de ladite carte de ligne (305).

8. Dispositif de communication (101 ; 301) selon l'une quelconque des revendications 1 à 7, comprenant en outre des moyens connecteurs pour relier de manière amovible ladite carte de ligne (105 ; 305) à ladite interface (107 ; 307, 308).
